Europäisches Patentamt

European Patent Office

Office européen des brevets

(19)

(11) Veröffentlichungsnummer: **0 095 713**

**B1**

(12) # EUROPÄISCHE PATENTSCHRIFT

(45) Veröffentlichungstag der Patentschrift:
03.09.86

(51) Int. Cl.⁴: **A 01 D 41/00**, A 01 D 41/02

(21) Anmeldenummer: **83105148.7**

(22) Anmeldetag: **25.05.83**

(54) **Erntemaschine mit einer Aufnahmevorrichtung.**

(30) Priorität: **01.06.82 US 383851**

(43) Veröffentlichungstag der Anmeldung:
**07.12.83 Patentblatt 83/49**

(45) Bekanntmachung des Hinweises auf die Patenterteilung:
**03.09.86 Patentblatt 86/36**

(84) Benannte Vertragsstaaten:
**BE DE FR GB IT**

(56) Entgegenhaltungen:
**AT-B-201 333**
**DD-A-153 042**
**DE-A-1 507 383**
**DE-A-1 582 643**
**DE-A-2 433 948**

(73) Patentinhaber: **DEERE & COMPANY, 1 John Deere Road, Moline Illinois 61265 (US)**

(72) Erfinder: **Love, Mahlon Lloyd, Pine Ridge Addition Rt. 4, Geneseo Illinois 61254 (US)**

(74) Vertreter: **Feldmann, Bernhard, DEERE & COMPANY European Office, Patent Department Steubenstrasse 36- 42 Postfach 503, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Erntemaschine mit einer Aufnahmevorrichtung, an die sich unmittelbar eine aus einer Dreschtrommel und einem Dreschkorb bestehende Drescheinheit anschließt, von der das ausgedroschene Erntegut über einen ersten Förderer in eine Weiterbearbeitungsvorrichtung geleitet wird und das gedroschene Erntegut einem einen weiteren Abscheidevorgang bewirkenden, das Erntegut zu einem Auswurfende fördernden und bis an die Drescheinheit geführten weiteren Förderer aufgegeben wird.

Bei dieser bekannten Erntemaschine (DE-A-1 582 643) schließt eine Aufnahmevorrichtung direkt an das in Richtung auf diese verlängerte Erntemaschinengehäuse an. Die Verlängerung des Erntemaschinengehäuses ist sowohl mit dem eigentlichen Erntemaschinengehäuse als auch mit der Aufnahmevorrichtung offensichtlich starr verbunden. In der Verlängerung ist eine Drescheinheit angeordnet, der ein erster Förderer für das ausgedroschene Erntegut und ein als Zinkenschüttler ausgebildeter weiterer Förderer für das gedroschene Erntegut nachgeschaltet ist. Beide Förderer sind ebenfalls starr, d. h. in ihrer Gesamtheit gegenüber dem Erntemaschinengehäuse unbeweglich, angeordnet.

Dieser bekannten Erntemaschine haftet der Nachteil an, daß die Aufnahmevorrichtung aufgrund der starren Anordnung der Verlängerung zu dem Erntemaschinengehäuse stets nur in der gleichen unveränderlichen Höhe ernten kann, was dem optimalen Erfassen von stehendem und liegendem Erntegut abträglich ist. Die Verlängerung des Erntemaschinengehäuses ragt ferner bis vor eine Fahrerplattform der Erntemaschine oder deren Vorderräder, wodurch beim Versand unnötig viel Raum benötigt wird.

Bei einer anderen bekannten Erntemaschine (DE-A-1 507 383) schließt unmittelbar rückwärtig der Drescheinheit ein mit Lamellen versehener Führungsteil an, über welchen das gedroschene Erntegut von einem Bandförderer dem vertikal schwingenden und mit Längsöffnungen versehenen weiteren Förderer zugeführt wird. Zwar können bereits ausgedroschene Körner, die sich noch in dem gedroschenen Erntegut befinden, zwischen den Lamellen hindurch auf den ersten Förderer fallen und von diesem der Weiterbearbeitungsvorrichtung in dem Erntemaschinengehäuse zugeleitet werden, eine echte Abscheidung, durch welche z. B. noch in den Ähren sich befindliche Körner ausgelöst werden, findet jedoch nicht statt.

Aus der AT-B-201 333 geht ferner eine starr auf ein Hinterachsgehäuse eines Ackerschleppers montierte Erntemaschine mit einer im Erntemaschinengehäuse ortsfest gelagerten und von der Aufnahmevorrichtung weit entfernten Drescheinheit hervor. Zwischen der Drescheinheit und der Aufnahmevorrichtung befindet sich zusätzlich eine Fördervorrichtung. Die Nachteile dieser Erntemaschine sind in dem für die Fördervorrichtung erforderlichen, aber für Abscheidungszwecke nicht benutzten Raum und der geringen Abscheidefläche zu sehen.

Die DD-A-153 042 schließlich offenbart eine bezüglich der Dresch- und Abscheidungsorgane hinlänglich bekannte Erntemaschine, der die gleichen Nachteile wie der aus der AT-B-201 333 bekannten Erntemaschine anhaften.

Es ist die der Erfindung zugrunde liegende Aufgabe, bei einer aus der DE-A-1 582 643 bekannten Erntemaschine deren Einsatzmöglichkeiten bei Erhöhung der Abscheidekapazität zu verbessern, ohne die Außenabmessungen derselben zu vergrößern.

Diese Aufgabe ist erfindungsgemäß dadurch gelöst worden, daß die Drescheinheit in einem einenends mit der Aufnahmevorrichtung lösbar verbundenen und anderenends an dem Erntemaschinengehäuse vertikal schwenkbar angelenkten Fördergehäuse angeordnet ist. Auf diese Weise wird das in der Drescheinheit bereits gedroschene Erntegut einem weiteren Abscheidevorgang, der unmittelbar rückwärtig der Drescheinheit beginnt, unterworfen. Dabei entsteht eine störungsfreie Annahme des Ernteguts ohne Verstopfungen und Umwicklungen, weil bei der Aufnahmevorrichtung, die unterschiedliche Arbeitshöhen einnehmen kann, in allen Arbeitshöhen die Aufnahmevorrichtung und deren Auslaß die gleiche Stellung zu der Drescheinheit aufweisen, wobei dies bei einer Erntemaschine, deren Drescheinheit in einem Fördergehäuse und deren weiterer Förderer in einem mit dem Fördergehäuse verbundenen Erntemaschinengehäuse angeordnet ist, am zweckmäßigsten dadurch erreicht wird, daß das Fördergehäuse mit dem Erntemaschinengehäuse vertikal schwenkbar verbunden ist, und es für den Erntegutfluß dann am dienlichsten ist, wenn das Fördergehäuse die gleiche oder annähernd die gleiche Breite wie der weitere Förderer aufweist.

Durch die Ausbildung der Erntemaschine gemäß den Merkmalen der Unteransprüche treten Kosten- und Zeiteinsparungen beim Verladen, beim Transport und bei der Wartung auf. Außerdem zeichnet sich die erfindungsgemäße Erntevorrichtung durch eine wesentliche Erhöhung der Abscheidekapazität bei einer Verbesserung der Wurfcharakteristik auf den Schüttlern und optimalen Führungsmöglichkeiten der Aufnahmevorrichtung gegenüber bekannten Erntemaschinen aus.

In der Zeichnung ist ein nachfolgend näher beschriebenes Beispiel eines erfindungsgemäß ausgeführten Mähdreschers dargestellt. Es zeigt:

Fig. 1 einen teilweise offen dargestellten Mähdrescher in Seitenansicht,

Fig. 2 eine Draufsicht auf eine Bergevorrichtung des Mähdreschers in Blickrichtung der Linie 2 - 2 in Fig. 1, teilweise im Schnitt,

Fig. 3 eine Ansicht der Bergevorrichtung in Blickrichtung der Linie 3 - 3 in Fig. 2,

Fig. 4 eine Seitenansicht des vorderen Teils des Mähdreschers mit angehobener Bergevorrichtung,

Fig. 5 eine ähnliche Ansicht wie Fig. 4, jedoch mit nur teilweise angehobener Bergevorrichtung.

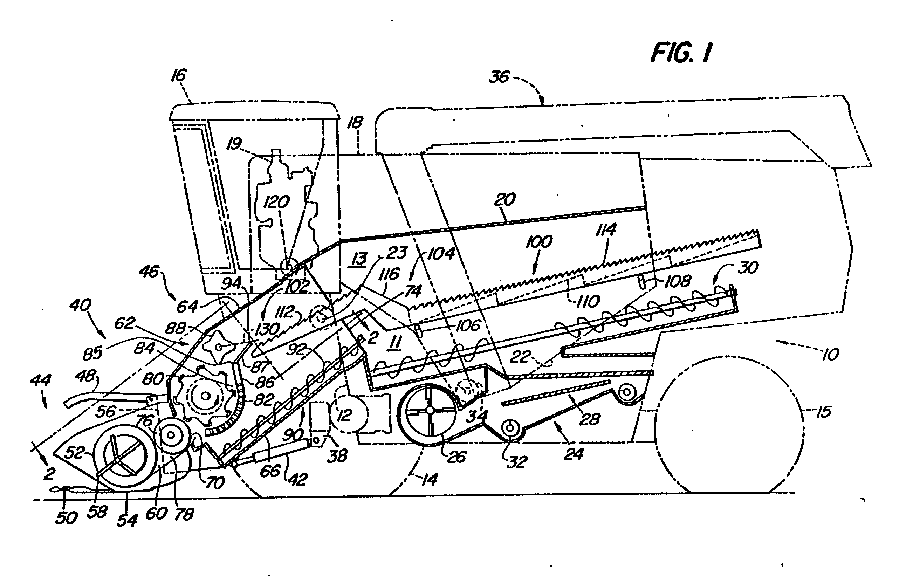

Ein in Fig. 1 gezeigtes Mähdreschergehäuse 10 mit sich gegenüberliegenden Seitenwänden 11 und einer Vorderseite 12 mit einer Einlaßöffnung 13 wird von einem Paar Antriebsräder 14 und einem Paar lenkbarer Hinterräder 15 getragen. Eine Fahrerkabine 16 ist relativ hoch und an dem Mähdreschergehäuse 10 vorne sowie vor einem Körnertank 18, aber gegenüber diesem nach links versetzt angeordnet. Ein Antriebsmotor 19 ist rechts neben der Fahrerkabine 16 und vor dem Körnertank 18 angebracht. Letzterer ist von bekannter Bauart mit einem relativ flachen Mittelteil, dessen Boden in Fig. 1 mit 20 bezeichnet ist. Weiterhin weist der Körnertank 18 zwei sich gegenüberliegende zusammenhängende Körnertankabschnitte 22 auf, die das Mähdreschergehäuse 10 seitlich begrenzen. An den jeweiligen vorderen Kanten der Seitenwände 11 des Mähdreschergehäuses 10 ist je ein Schwenklager 23 zur Aufnahme einer noch zu beschreibenden Bergevorrichtung 40 befestigt.

Der untere Abschnitt des Mähdreschergehäuses 10 wird von einer Reinigungs- oder Weiterbearbeitungsvorrichtung 24 eingenommen, die im einzelnen mit einem Gebläse 26 zum Belüften mehrerer oszillierender Siebe 28 ausgestattet ist. Ausgeschiedenes Korngut wird der Reinigungsvorrichtung 24 mittels Schnecken 30, die sich im wesentlichen über die gesamte Breite des Mähdreschergehäuses 10 erstrecken, zugeführt.

Von der Reinigungsvorrichtung 24 kommendes gereinigtes Korngut wird von einer Körnerschnecke 32 zusammengeführt und dann mittels eines nicht gezeigten Körnerelevators dem Körnertank 18 zugeliefert. Eine Querschnecke 34 im Körnertank 18, die zu beiden zusammenhängenden Körnertankabschnitten 22 hin offen ist, beschickt ein Entleerrohr 36 mit dem Korngut, um den Körnertank 18 zu entleeren.

Die frontseitig angebrachte Bergevorrichtung 40 ist vertikal schwenkbar in den Schwenklagern 23 gehalten. Ein Paar Hydraulikzylinder 42 erstreckt sich zwischen einem Rahmen 38 des Mähdreschergehäuses 10 und einer Unterseite 39 der Bergevorrichtung 40 und dient dazu, die Bergevorrichtung 40 zum Anpassen an die Arbeitshöhe um eine durch die Schwenklager 23 verlaufende gedachte Querachse zu schwenken. Die Bergevorrichtung 40 setzt sich aus einer vorne gelegenen Aufnahmevorrichtung 44 und einem Fördergehäuse 46 zusammen.

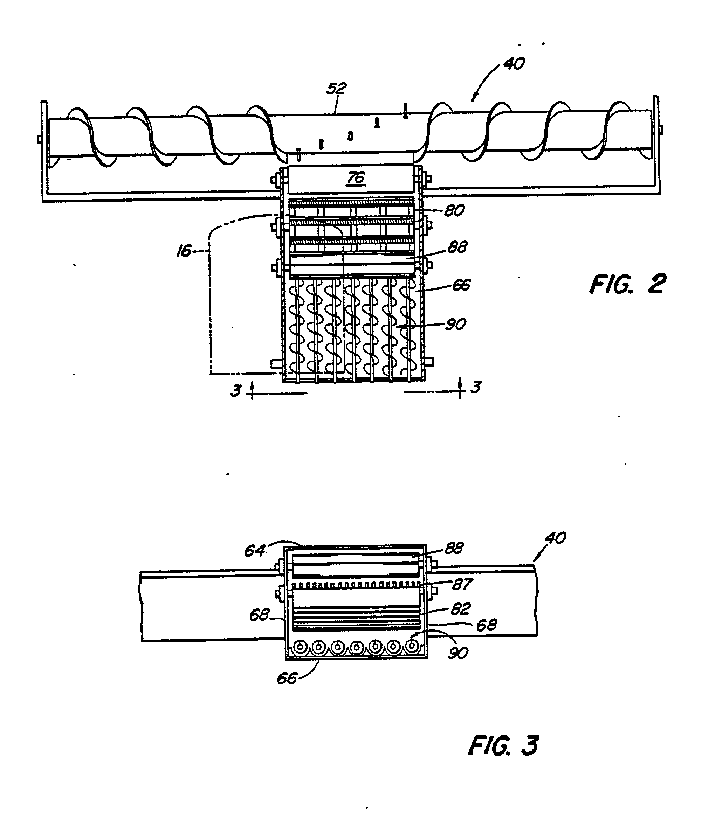

Die Aufnahmevorrichtung 44 wird in diesem Ausführungsbeispiel von einem Schneidwerk gebildet, bei dem eine vorne montierte, nicht gezeigte, auf Haspelarmen 48 geführte Haspel zu schneidendes Erntegut in Eingriff mit einem Mähwerk 50 führt und es nach dem Abschneiden in Eingriff mit einer sich seitwärts erstreckenden länglichen Zuführschnecke 52 der Aufnahmevorrichtung 44 bringt. Mit Unterstützung eines Schneidwerkbodens 54 und einer rückwärtigen Wand 56 drängt die Zuführschnecke 52 das angesammelte Erntegut zu der Mitte des Schneidwerks (siehe Fig. 2), wo in ihrer Art bekannte aus- und einfahrbare Finger 58, die von der Zuführschnecke 52 getragen werden, dazu beitragen, das Erntegut nach hinten und nach oben durch eine Auslaßöffnung 60 der Aufnahmevorrichtung 44 zu transportieren.

Das Fördergehäuse 46 besteht im einzelnen aus einem Gehäuse 62, das einen tunnelförmigen, nach hinten und oben geneigt verlaufenden Durchlaß bildet und das von einer Oberseite 64, einer Unterseite 66 und sich gegenüberliegenden, im allgemeinen aufrechten Seitenwänden 68 umschlossen wird. Ein vorderer Einlaß 70 des Gehäuses 62 paßt genau mit der Auslaßöffnung 60 der Aufnahmevorrichtung 44 zusammen, und das Gehäuse 62 und die Aufnahmevorrichtung 44 sind in bekannter Weise lösbar miteinander verbunden.

Sich gegenüberliegende, kurze, längliche und sich quer erstreckende Zapfen 72 sind ungefähr in der Mitte von rückwärtigen Kanten 74 der Seitenwände 68 des Gehäuses 62 getragen und in den Schwenklagern 23 gehalten, um den Schwenkpunkt der Bergevorrichtung 40 zu bilden. Das obere stromabwärts gelegene Ende des Gehäuses 62 paßt in die Einlaßöffnung 13 des Mähdreschergehäuses 10, so daß die Bergevorrichtung 40 auf- und abwärts schwenken kann.

Eine sich quer erstreckende Strohleittrommel 76 ist drehbar zwischen den Seitenwänden 68 des Gehäuses 62 nahe dem Einlaß 70 aufgenommen, so daß sie von der Zuführschnecke 52 abgegebenes Erntegut aufnehmen kann und es nach hinten und nach oben über eine Verlängerung 78 auf dem Schneidwerksboden 54 und in Eingriff mit einer Dreschtrommel 80 bringen kann. Ein durchlässiger Dreschkorb 82 umgibt die Dreschtrommel 80 zu ca. 90°, um somit eine Dreschzone 84 zu bilden, und ein Verlängerungsteil 86 des Dreschkorbs 82 erstreckt sich nahezu vertikal nach oben, wenn die Bergevorrichtung 40 sich in ihrem Arbeitsbereich befindet, während ein Fingerrechen 87 von seiner stromabwärts gelegenen Kante 85 nach hinten und nach oben verläuft. Eine zweite dicht an der Oberseite 64 des Gehäuses 62 gelegene Strohleittrommel 88 ist vorgesehen, um den Auswurf des von der Dreschzone 84 abgegebenen Ernteguts zu steuern.

Ein erster Förderer 90, der von einer Reihe sich längs erstreckender, nebeneinander gelegener Zusammenführ- bzw. Förderschnecken 92 gebildet wird, ähnlich der Schnecken 30 in dem Mähdreschergehäuse 10, bedeckt die Unterseite 66 des Gehäuses 62 und hat ein abgabeseitiges Ende, das sich rückwärtig etwas über die Unterseite 66 hinaus erstreckt (siehe Fig. 2 und 3).

Ein sich längs erstreckender weiterer Förderer in der Form einer Strohschüttlergruppe 100 belegt den mittleren Bereich des Mähdreschergehäuses 10, der aus einem von den zusammenhängenden Körnertankabschnitten 22 und dem Boden 20 des Körnertanks 18 gebildeten Tunnel besteht. Diese Strohschüttlergruppe 100 erstreckt sich nach vorne bis in das Gehäuse 62 und läuft dort in einem vorderen Ende 102, das das von der Strohleittrommel 88 zugeworfene Erntegut aufnimmt, aus. Die Strohschüttlergruppe 100 kann aus drei, vier, fünf oder noch mehr einzelnen, nebeneinander gelegenen Strohschüttlern 104 bestehen, wobei jeder zum Hin- und Herbewegen auf jeweils gleichen vorderen und rückwärtigen Kurbelwellen 106 und 108 gelagert ist. In der Zeichnung ist nur einer der Strohschüttler 104 zu sehen. Jeder Strohschüttler 104 ist von herkömmlicher Bauart und ist mit gelochten Belägen 110 bestückt. Außerdem weist er auf seiner Länge mindestens ein Stufenteil 116 in der Nähe der Einlaßöffnung 13 auf, das ein Vorderteil 112 und ein rückwärtiges Teil 114, das den Hauptteil des Strohschüttlers 104 ausmacht, miteinander verbindet.

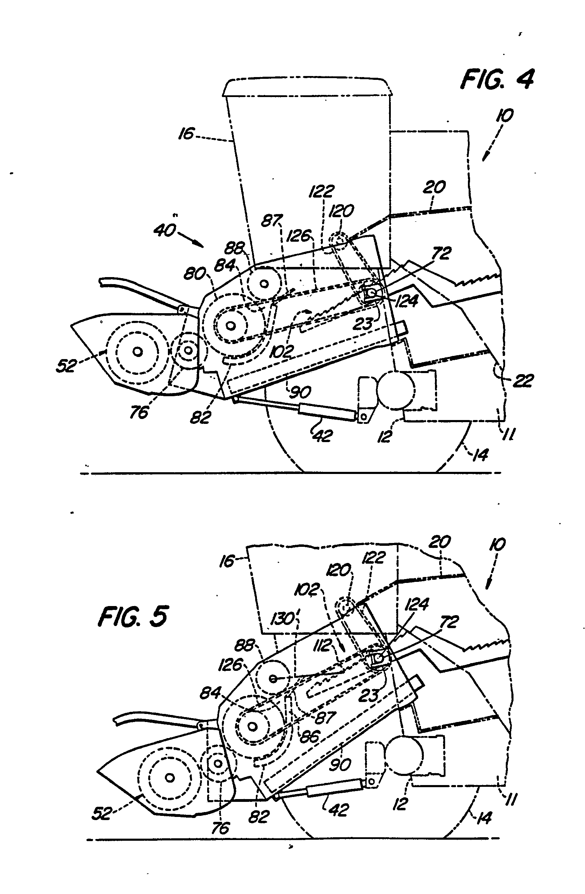

Die einzelnen Antriebe für die verschiedenen Mähdrescherkomponenten sind in bekannter Art ausgeführt und werden von einer Antriebswelle 120 des Antriebsmotors 19 abgenommen. Als Beispiel ist in Fig. 4 ein Teil des Antriebs gezeigt, der eine Zwischenwelle 122 der Bergevorrichtung 40 zum Übertragen der Antriebskraft von dem Antriebsmotor 19 auf eine Bergevorrichtungsvorgelegewelle 124, die sich koaxial zu der gedachten Schwenkachse durch die Schwenklager 2ß erstreckt, und einen Dreschtrommelantrieb 126, der mit der Dreschtrommel 80 verbunden ist, aufweist. Während der Arbeit wird das von der Aufnahmevorrichtung 44 angenommene Erntegut mittels der Strohleittrommel 76, wobei beide in der üblichen Art arbeiten, der Dreschtrommel 80 zugeführt. Ein Großteil des Ausdreschens und des Abscheidens des Ernteguts bzw. des Körnguts findet in der Dreschzone 84 zwischen der Dreschtrommel 80 und dem Dreschkorb 82 statt, wobei das Körngut und andere kleine Erntegutpartikel durch die Öffnungen in dem Dreschkorb 82 hindurch auf den Förderer 90 fallen. Es ist vorteilhaft, aber nicht unbedingt notwendig für die Funktion des erfingungsgemäß ausgestalteten Mähdreschers, einen zumindest teilweise offenen Dreschkorb 82 zu verwenden. Das verbleibende Erntegut, insbesondere Stroh und Spreu, wird weiter durch die Dreschzone 84 bewegt, um schließlich von der zweiten Strohleittrommel ß8 abgebremst und nach unten auf die Strohschüttler 104 abgelenkt zu werden. Um von der gesamten Abscheidekapazität der Abscheideelemente wie hier der Strohschüttler 104 Gebrauch machen zu können, sollte das Erntegut so nahe wie möglich an das vordere Ende 102 der Strohschüttler 104 geworfen werden. Diesbezüglich sollte die grundsätzliche räumliche Anordnung und Beziehung der Strohleittrommel 88 und des Fingerrechens 87 zu den vorderen Enden 102 der Strohschüttler 104 notwendigerweise gleich wie bei herkömmlichen Mähdreschern ausgeführt sein. Jedoch muß dann, wenn die Abscheideelemente wie die Strohschüttler 104 im Ausführungsbeispiel mit dem Mähdreschergehäuse 10 verbunden sind, die Relativbewegung zwischen den Strohschüttlern 104 und der Kombination Fingerrechen 87 - Strohleittrommel 88, die von dem Gehäuse 62 getragen wird, berücksichtigt werden. An dem unteren Ende des Arbeitsbereichs der Bergevorrichtung 40, wie dies aus Fig. 1 erkennbar ist, ist die vorgenannte Beziehung im wesentlichen die gleiche wie bei der unveränderbaren Anordnung in einem herkömmlichen Mähdrescher. Zu Vergleichszwecken wird jedoch auf die in Fig. 1 gezeichnete Verlängerung einer Linie 130, die vom Mittelpunkt der Strohleittrommel 88 durch eine äußerste Kante 94 des Fingerrechens 87 geht und das Vorderteil 112 der Strohschüttler 104 trifft, hingewiesen. An dem oberen Ende des Arbeitsbereichs der Bergevorrichtung 40 (Fig. 5) ist die Strohleittrommel 88 etwas über die Vorderteile 112 der Strohschüttler 104 angehoben und somit der Winkel der angezeigten Wurflinie 130 etwas geändert; das Erntegut wird aber trotzdem nahe dem vorderen Ende 102 der Strohschüttler 104 abgegeben. Es ist ersichtlich, daß die Längsbewegung einer Aufschlagzone des Ernteguts auf dem Vorderteil 112 der Strohschüttler 104 relativ zu den Strohschüttlern 104 selbst, wenn sich die Arbeitshöhe ändert, um so mehr verringert wird, je näher die durch die Schwenklager 23 gehende gedachte Achse an der Strohleittrommel 88 und den Vorderteilen 112 der Strohschüttler 104 in ihrer normalen Lage zu liegen kommt.

Abgeschiedenes Korngut und kleine Erntegutpartikel können nach unten durch die gelochten Beläge 110 auf den Vorderteilen 112 der Strohschüttler 104 hindurchfallen, um von dem Förderer 90 zusammengeführt und den Schnecken 30 der Reinigungsvorrichtung 24 aufgegeben zu werden.

Der Hauptanteil des Strohs und der größeren Erntegutteile wird von den Strohschüttlern 104 aufgenommen und in oszillierender Bewegung rückwärtig zum Auswurf an dem rückwärtigen Ende des Mähdreschergehäuses 10 geführt, wobei der Abscheidungsvorgang auf den Strohschüttlern 104 fortgesetzt und das abgeschiedene Gut von den Schnecken 30 zusammengefürt wird.

Aus dem Vorbeschriebenen und den Zeichnungen ist klar erkennbar, daß bei diesem Ausführungsbeispiel der voluminetrische Wirkungsgrad (Abscheidekapazität pro Volumeneinheit) bei einer vorgegebenen Größe des Mähdreschergehäuses 10 durch die Verlängerung der Strohschüttler 104, so daß diese bis in das Fördergehäuse 46 hineinreichen, was eigentlich einer sich nach vorne erstreckenden Verlängerung der Reinigungsvorrichtung 24 entspricht, bedeutend gesteigert werden kann. Das Fördergehäuse 46 wird dergestalt geändert, daß es etwas tiefer als gewöhnlich ausgebildet wird, um die Dreschtrommel 80, den Dreschkorb 82 und den an der Unterseite 66 angeordneten Förderer 90 unterzubringen und eine Relativbewegung zwischen den vorderen Enden 102 der Strohschüttler 104 und dem Fördergehäuse 46 zuzulassen. Die gewünschte Geometrie der Bergevorrichtung 40 in bezug auf die Anlenkpunkte (Schwenklager 23) und der Abstand der Bergevorrichtung 40 zu den Schwenklagern 23 bleiben erhalten, und die wirkungsvolleren längeren Strohschüttler 104 mit einer vorhandenen größeren Abscheidekapazität werden gewonnen, ohne die Außenabmessungen des Mähdreschergehäuses 10 zu ändern.

Wenn der Vorderteil 112 der Strohschüttler 104 wie im beschriebenen Ausführungsbeispiel in das Fördergehäuse 46 vorkragt, sind keine zusätzlichen Antriebs- oder Bedienungselemente für die Strohschüttler 104 oder die Schnecken 30 der Reinigungsvorrichtung 24 erforderlich. Es könnte lediglich ratsam sein, die vordere Kurbelwelle 106 und die damit verbundenen Teile etwas stärker auszulegen, da die Vorderteile 112 der Strohschüttler 104 eine zusätzliche Belastung erfahren.

Es ist ein Merkmal der Erfindung, daß das Fördergehäuse 46 zwei das Erntegut bearbeitende Komponenten, nämlich die Dreschtrommel 80 mit dem Dreschkorb 82 und die Abscheideelemente in Form der vorderen Enden 102 der Strohschüttler 104 aufweist. Durch das Hinzufügen des Förderers 90 für das Korngut und die kleinen Erntegutpartikel und der vorderen Enden 102 der gleichzeitig als Förder- und Abscheideelemente dienenden Strohschüttler 104 sind letztlich zwei Förderelemente geschaffen, die Erntegut durch die Vorderseite 12 des Mähdreschergehäuses 10 unabhängig voneinander fördern. Die in dem unteren Teil des Fördergehäuses 46 begonnene Abscheidung wird erhalten, und es tritt keine weitere Vermengung ein, wie es bei einigen bekannten Maschinen, wo nur ein einziger Förderer das Erntegut von dem Fördergehäuse 46 sogar nach einer anfänglichen Abscheidung durch eine vordere tiefer gelegene Dreschtrommel dem Mähdreschergehäuse zuführt, vorkommt.

Angaben wie vorne, rückwärtig, links, rechts, oben und unten beziehen sich auf die Fahrtrichtung des Mähdreschers beim Ernten.

## Patentansprüche

1. Erntemaschine (10) mit einer Aufnahmevorrichtung (44), an die sich unmittelbar eine aus einer Dreschtrommel (80) und einem Dreschkorb (82) bestehende Drescheinheit (80, 82) anschließt, von der das ausgedroschene Erntegut über einen ersten Förderer (90) in eine Weiterbearbeitungsvorrichtung (24, 28) geleitet wird und das gedroschene Erntegut einem einen weiteren Abscheidevorgang bewirkenden, das Erntegut zu einem Auswurfende fördernden und bis an die Drescheinheit (80, 82) geführten weiteren Förderer (100) aufgegeben wird, dadurch gekennzeichnet, daß die Drescheinheit (80, 82) in einem einenends mit der Aufnahmevorrichtung (44) lösbar verbundenen und anderenends an dem Erntemaschinengehäuse (10) vertikal schwenkbar angelenkten Fördergehäuse (46) angeordnet ist.

2. Erntemaschine nach Anspruch 1, dadurch gekennzeichnet, daß das Fördergehäuse (46) die gleiche oder annähernd die gleiche Breite wie der weitere Förderer (100) aufweist.

3. Erntemaschine nach Anspruch 1, dadurch gekennzeichnet, daß das Fördergehäuse (46) von dem Erntemaschinengehäuse (10) abnehmbar ist.

4. Erntemaschine nach einem oder mehreren der vorgenannten Ansprüche, dadurch gekennzeichnet, daß der vordere Teil (112) des weiteren Förderers (100) sich bis mindestens zur Längsmitte des Fördergehäuses (46) erstreckt.

5. Erntemaschine nach einem oder mehreren der vorgenannten Ansprüche, dadurch gekennzeichnet, daß der weitere Förderer (100) auf seiner gesamten Länge aus nebeneinander angeordneten Schüttlern (104) besteht.

6. Erntemaschine nach Anspruch 5, dadurch gekennzeichnet, daß jeder Schüttler (104) aus einem Vorderteil (112) und einem rückwärtigen Teil (114) besteht, zwischen denen ein Stufenteil (116) vorgesehen ist.

7. Erntemaschine nach einem oder mehreren der vorgenannten Ansprüche, dadurch gekennzeichnet, daß der Stufenteil (116) sich im Bereich des Anschlußendes (74) des Fördergehäuses (46) am Erntemaschinengehäuse (10) befindet.

8. Erntemaschine nach einem oder mehreren der vorgenannten Ansprüche, dadurch gekennzeichnet, daß der weitere Förderer (100) sich freitragend in das Fördergehäuse (46) erstreckt.

9. Erntemaschine nach einem oder mehreren der vorgenannten Ansprüche, dadurch gekennzeichnet, daß der Dreschkorb (82) die Dreschtrommel (80) zu mindestens 90° umschlingt und der Dreschkorb (82) ausgangsseitig nahezu vertikal verläuft, solange die durch Aufnahmevorrichtung (44) und Fördergehäuse (46) gebildete Bergevorrichtung (40) eine ihrer Arbeitshöhen einnimmt.

10. Erntemaschine nach einem oder mehreren der vorgenannten Ansprüche, dadurch gekennzeichnet, daß ausgangsseitig und eingangsseitig der Drescheinheit (80, 82) je eine Strohleittrommel (76, 88) vorgesehen ist.

11. Erntemaschine nach einem oder mehreren der vorgenannten Ansprüche, dadurch gekennzeichnet, daß bei abgebautem Fördergehäuse (46) das vordere Ende (102) des weiteren Förderers (100) hinter der vordersten Kante einer Fahrerplattform (16) liegt.

12. Erntemaschine nach einem oder mehreren der vorgenannten Ansprüche, dadurch gekennzeichnet, daß der erste Förderer (90) ausschließlich im Fördergehäuse (46) angeordnet ist.

## Claims

1. A harvester (10) comprising a pick-up means (44) directly adjoined by a threshing unit (80, 82) which comprises a threshing drum (80) and a threshing concave (82) and from which the threshed-out crop material is passed by way of a first conveyor (90) into a means (24, 28) for further processing thereof and the threshed crop material is fed to a further conveyor (100) which carries out a further separation operation and which conveys the crop material to a discharge end and which is extended to the threshing unit (80, 82), characterised in that the threshing unit (80, 82) is arranged in a conveyor housing (46) which at one end is releasably connected to the pick-up means (44) and which at the other end is vertically pivotably connected to the harvester housing (10).

2. A harvester according to claim 1 characterised in that the conveyor housing (46) is of the same or approximately the same width as the further conveyor (100).

3. A harvester according to claim 1 characterised in that the conveyor housing (46) is removable from the harvester housing (10).

4. A harvester according to one or more of the preceding claims characterised in that the front part (112) of the further conveyor (100) extends at least until the longitudinal centre of the conveyor housing (46).

5. A harvester according to one or more of the preceding claims characterised in that the further conveyor (100) comprises juxtaposed shakers (104), over its entire length.

6. A harvester according to claim 5 characterised in that each shaker (104) comprises a front part (112) and a rearward part (114), with a step part (116) provided therebetween.

7. A harvester according to one or more of the preceding claims characterised in that the step part (116) is disposed in the region of the end (74) at which the conveyor housing (46) is connected to the harvester housing (10).

8. A harvester according to one or more of the preceding claims characterised in that the further conveyor (100) extends in a cantilever configuration into the conveyor housing (46).

9. A harvester according to one or more of the preceding claims characterised in that the threshing concave (82) extends around the threshing drum (80) to an extent of at least 90° and the threshing concave (82) extends almost vertically at its discharge end as long as the crop collection arrangement (40) which is formed by the pick-up means (44) ard the conveyor housing (46) is at one of its operating heights.

10. A harvester according to one or more of the preceding claims characterised in that respective straw guide drums (76, 88) are provided at each of the discharge end and the intake end of the threshing unit (80, 82).

11. A harvester according to one or more of the preceding claims characterised in that, when the conveyor housing (46) is removed, the front end (102) of the further conveyor (100) lies behind the most forward edge of a driving platform (16).

12. A harvester according to one or more of the preceding claims characterised in that the first conveyor (90) is disposed exclusively in the conveyor housing (46).

## Revendications

1.- Machine de récolte (10) équipée d'un dispositif de récolte (44) auquel se raccorde directement un ensemble de battage (80, 82) constitué par un batteur en forme de rotor (80) et un contre-batteur (82), à partir duquel les produits de récolte débarrassés du grain sont acheminés par l'intermédiaire d'un premier transporteur (90) jusque dans un dispositif de traitement ultérieur (24, 28), les produits de récolte battus étant transférés à un autre transporteur (100) assurant une autre opération de séparation, transférant les produits de récolte à une extrémité d'éjection et s'étendant jusqu'à l'ensemble de battage (80, 82), caractérisée en ce que l'ensemble de battage (80, 82) est disposé dans un carter de convoyeur (46) relié amoviblement au dispositif de récolte (44) à une extrémité et articulé de manière à pouvoir pivoter verticalement sur le corps (10) dela machine de récolte à l'autre extrémité.

2.- Machine de récolte suivant la revendication 1, caractérisée en ce que le carter de convoyeur (46) a la même largeur ou sensiblement la même largeur que l'autre transporteur (100).

3.- Machine de récolte suivant la revendication 1, caractérisée en ce que le carter de convoyeur (46) peut être séparé ou démonté du corps (10) de la machine de récolte.

4.- Machine de récolte suivant une ou plusieurs des revendications précédentes, caractérisée en ce que la partie avant (112) de l'autre transporteur (100) s'étend au moins jusqu'au milieu de la longueur du carter de convoyeur (46).

5.- Machine de récolte suivant une ou plusieurs des revendications précédentes, caractérisée en ce que l'autre transporteur (100) est constitué sur la totalité de sa longueur par des secoueurs (104) disposés les uns à côté des autres.

6.- Machine de récolte suivant la revendication 5, caractérisée en ce que chaque secoueur (104) est constitué par une partie avant (112) et une partie arrière (114) entre lesquelles un redan ou gradin (116) est prévu.

7.- Machine de récolte suivant une ou plusieurs des revendications précédentes, caractérisée en ce que le redan (116) se trouve au voisinage de l'extrémité de raccordement (74) du carter de convoyeur (46) au corps (10) de la machine de récolte.

8.- Machine de récolte suivant une ou plusieurs des revendications précédentes, caractérisée en ce que l'autre transporteur (100) s'étend en porte-à-faux dans le carter de convoyeur (46).

9.- Machine de récolte suivant une ou plusieurs des revendications précédentes, caractérisée en ce que le contre-batteur (82) entoure le batteur ou rotor (80) sur au moins 90°, et en ce que ce contre-batteur (82) s'étend du côté de sortie en principe verticalement tant que l'ensemble de récolte (40) formé par le dispositif de récolte (44) et le carter de convoyeur (46) vient occuper l'une de ses hauteurs de travail.

10.- Machine de récolte suivant une ou plusieurs des revendications précédentes, caractérisée en ce qu'il est prévu, du côté sortie et du côté entrée de l'ensemble de battage (80, 82), chaque fois un tambour guide-paille (76, 88).

11. Machine de récolte suivant une ou plusieurs des revendications précédentes, caractérisée en ce que, lorsque le carter de convoyeur (46) est déposé, l'extrémité avant (102) de l'autre transporteur (100) se trouve derrière le bord le plus avancé de la plate-forme de conduite (16).

12.- Machine de récolte suivant une ou plusieurs des revendications précédentes, caractérisée en ce que le premier transporteur ou convoyeur (90) se trouve exclusivement dans le carter de convoyeur (46).

FIG. I

FIG. 2

FIG. 3

3

FIG. 4

FIG. 5